Europäisches Patentamt

European Patent Office

Office européen des brevets

(11) Publication number: **0 290 019 B1**

(12) **EUROPEAN PATENT SPECIFICATION**

(45) Date of publication of patent specification: **25.03.92**  (51) Int. Cl.⁵: **B65D 39/00**

(21) Application number: **88107226.8**

(22) Date of filing: **05.05.88**

(54) **Vial seal.**

(30) Priority: **08.05.87 US 47831**

(43) Date of publication of application:
**09.11.88 Bulletin 88/45**

(45) Publication of the grant of the patent:
**25.03.92 Bulletin 92/13**

(84) Designated Contracting States:
**AT BE CH DE ES FR GB IT LI NL**

(56) References cited:
**FR-A- 2 431 190**
**US-A- 4 338 383**

(73) Proprietor: **ABBOTT LABORATORIES**

**Abbott Park, Illinois 60064(US)**

(72) Inventor: **Jordan, Willie Walter**
**2609 Brookcrest**
**Garland Texas 75040(US)**

(74) Representative: **Modiano, Guido et al**
**MODIANO, JOSIF, PISANTY & STAUB Baader-strasse 3**
**W-8000 München 5(DE)**

**Description**

FIELD OF THE INVENTION

This invention relates to seals for closing containers. More specifically, this invention relates to a seal for closing a group of reagent-containing vials arranged in a reagent pack for use with automated clinical analyzer apparatus.

BACKGROUND OF THE INVENTION

In the field of diagnostic testing of biological fluids for the presence of drugs, viral disease, bacterial infections, and the like, samples are collected, reacted with reagents, and the results of the reactions analyzed using well known techniques. The reagents used in such tests are typically purchased in and drawn from vials or other containers which are often arranged for convenience in preformed packs having a plurality of such vials containing the reagents required for a specific test. For economy and practicality, each vial typically contains an aliquot of reagent sufficient to test a number of samples. Such a reagent pack is described in U.S. Patent No. 4,849,177 (published 18.07.1989) entitled Reagent Pack and Carousel.

A problem with such "multiple dose" reagent packs is that once opened, the reagents may become contaminated. For example, the properties of certain reagents may be affected by exposure to light or air, the passage of time, or exposure to other reagents or contaminants.

The vials of such packs could be individually reclosed using individual screw-on or other closures typically provided with such vials. However, such individual closures can be misplaced or lost when separated from their vials. In addition, it is time consuming and inconvenient to individually open and reclose each vial of a pack with a separate closure, particularly in an automatic testing environment where test set-up time and the time between tests can have a critical impact on throughput.

Thus, a need exists for a vial seal apparatus that provides expedient, economical and safe resealing of multiple dose reagent vials, once opened. A desirable feature of such an apparatus is to provide resealing of a group of vials arranged in a reagent pack. Another desirable feature is to provide an apparatus which minimizes contamination during handling and loss of the seal during the useful life of the reagents. It is advantageous to provide an apparatus that remains attached to, without interfering with, the vials of a reagent pack during use of the reagent pack in an automated clinical analyzer.

SUMMARY OF THE INVENTION

This invention, therefore, seeks to provide a vial seal which provides economical and expedient sealing of the vials contained in a reagent pack.

The above-mentioned problems encountered in the use of the known vial closures are solved, and the aim of providing an economical and expedient sealing of vials contained in a reagent pack is achieved, by a vial seal as defined in claim 1.

The vial seal of the invention is adapted to be removably attached to the vials throughout storage, as well as when the reagent pack is in use. In addition, the vial seal of the present invention, once attached, forms a single unit with its associated reagent pack.

The vial seal of the present invention, therefore, comprises a number of vial inserts which are attached to a thin, pliable connecting cover in a linear arrangement corresponding to the openings of a number of reagent-containing vials in a reagent pack. The cover is capable of bending so that each insert can be individually inserted into or removed from the opening of its corresponding vial. The cover has a series of linearly-arranged openings which are adapted to fit over and around the necks of the reagent-containing vials so that the vial seal is removably attached to the necks of the reagent-containing vials. In the preferred embodiment the cover includes a first portion and a second portion. The first portion has first and second surfaces with the vial inserts formed on and projecting away from the first surface. The first surface is also flanged in a direction from an inner end to a free outer end.

In addition, the vial seal of the present invention includes a post with a ball-shaped end and a corresponding aperture, both formed in the pliable cover. In the preferred embodiment the aperture is located in a midsection of the cover between the first and second portions. When the reagent pack is being used, the ball-shaped end is adapted to be fitted into the aperture to position the inserts away from the openings of the vials to prevent interference with the operation of a clinical analyzer or other instrument. The openings remain over and around the necks of the vials so that the vial seal remains with the reagent pack even during testing.

BRIEF DESCRIPTION OF THE DRAWINGS

The features which are believed to characterize the invention are set forth in the appended claims. The invention itself, together with further features and attendant advantages, will be best understood by reference to the following detailed description of a presently preferred embodiment thereof, taken in conjunction with the accompanying drawings, in which:

FIG. 1 is a perspective view of the vial seal of the present invention attached to and in sealing contact with vials in a reagent pack.

FIG. 2 is a perspective view of the present invention illustrating the vial inserts thereof and the openings thereof placed over and around the necks of the vials in the reagent pack.

FIG. 3 is a perspective view of the vial seal of the present invention illustrating the ball-shaped end placed through the hole in the pliable cover to hold the inserts in a non-interfering position.

## DETAILED DESCRIPTION OF A PRESENTLY PREFERRED EMBODIMENT

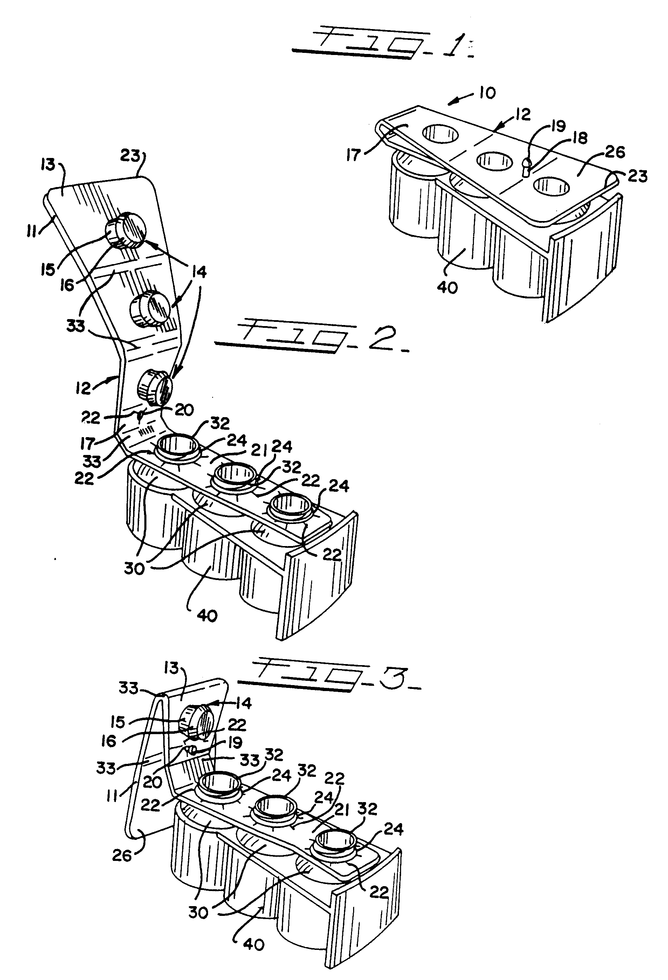

As seen in FIGS. 1, 2 and 3, a presently preferred embodiment of the present invention comprises a vial seal 10 having a pliable cover 12. One surface of the connecting cover 12 has formed thereon a series of closure means constituted by vial inserts 14. Each insert 14 has a cylindrical base 15 and a rib 16 located near the end of the insert 14. Each of the inserts 14 corresponds to an opening of a vial 30 which is mounted in a reagent pack 40. More specifically the cover 12 has a first portion 11 having first 13 and second 26 surfaces and a second portion 21. Vial inserts 14 are positioned on the first surface 13 of the first portion 11 which also has an inner end 17 and outer end 23. In the preferred embodiment, the first portion 11 is flanged from the inner end 17 toward the outer end 23. This "wing type" configuration of the first portion 11 provides a finger grip surface proximate the outer end 23. This finger grip area provides for opening and closing the cover 12 without touching the sealing portions 14 of cover 12, thereby minimizing cross-contamination of the reagents. Each of the inserts 14, like the connecting cover 12, is formed of a pliable plastic. When an insert 14 is inserted into the opening of a vial 30 formed by a neck 32, the insert 14 flexibly forms to and provides a secure fluid-tight press fit in the opening of the vial 30. Referring to Fig. 3, a tight press fit of insert 14 into vial 30 is enhanced by the enlarged portion or rib 16 of insert 14. The fluid-tight seal provided by the insert 14 prevents contaminants of the reagent by other reagents, samples, or the environment.

In the preferred embodiment, the inserts 14 are arranged linearly along the first surface 13 of the first portion 11 to accommodate a linear arrangement of vials 30 when mounted in the reagent pack 40. Other geometries may also be used to accommodate various reagent pack configurations. The inserts 14 are formed along the first surface 13 of the pliable cover 12 at spacings corresponding to the spacings of the necks 32 of each of the vials 30. Ribs or joints 33 are preferably formed in the cover 12 intermediate each of the inserts 14 to further facilitate bending of the cover 12.

In addition to the inserts 14, the pliable cover 12 also contains a series of openings 24, each corresponding to one of the vials 30 in the reagent pack 40. As best seen in Fig. 2, the openings 24 are aligned along the second portion 21. Each of the openings 24 preferably has a plurality of scores 22 extending radially therefrom and cut into the cover 12. The radiating scores 22 provide flexibility to allow the openings to be fitted over and around the necks of their respective vials, including any flanges or threaded portions formed thereon. The scores 22 also allow the openings 24, once in place, to grip the necks 32 of the vials 30 and remain firmly in place. The openings 24 on the second portion 21 of the vial seal 10 remain attached to the necks 32 of the vials 30 even when the inserts 14 on the first surface 13 of the first portion 11 are disengaged from the openings in the vials 30. Thus, the vial seal 10, once mounted on the vials 30 of a reagent pack 40, remains attached as a single unit with the reagent pack 40 until the vials 30 are emptied. While in the preferred embodiment the vial seal is intended to be disposable when vials 30 are empty, the vial seal 10 is removable and could be used with another reagent pack.

The vial seal 10 also contains on the surface 26 opposite the inserts 14 means for securely positioning the inserts 14 proximate the vials 30 when the inserts 14 are disengaged from the vials. In its preferred embodiment the positioning means comprises a cooperating shaft and receiving aperture which the shaft securably engages. Most preferably, as shown in Fig. 3 the shaft is a post 18 with a generally ball-shaped end 19. The post 18 and ball-shaped end 19 correspond to the aperture 20 located between the last of the inserts 14 on the first portion 11 and the first of the openings 24 on the second portion 21, as seen in FIG. 2. The cover 12 can be "folded" as seen in FIG. 3, in such a way that the ball-shaped end 19 aligns with and fits through the aperture 20. When the end 19 is inserted into the aperture 20, the vial seal is maintained in a position wherein the inserts 14 are held in proximity to the vials 30 of the reagent pack 40, but are removed from the space above the necks 32 of the vials 30 so as not to interfere with access to the reagents contained therein by a clinical analyzer, for example. This feature allows the vial seal 10 to remain as a single unit with a set of reagent vials 30 in a reagent pack 40 at all times.

The aperture 20 preferably contains radiating scores 22 similar to those associated with the openings 24. The scores 22 facilitate insertion of the ball-shaped end 19 of the post 18 through the aperture 20. Once the ball-shaped end 19 of the post 18 is inserted through the aperture 20, the radiating scores 22 help keep the ball-shaped end 19 in place.

It should be noted that although a particular configuration of the vial seal 10 which is adapted for use with a particular reagent pack 40 has been described and illustrated, the vial seal 10 is advantageously used with reagent packs having different configurations as well. For example, although the reagent pack 40 as shown in the figures contains three vials 30, alternate embodiments such as the four vial configuration of the referenced application, as well as other configurations, are entirely conducive to the use of similar alternate embodiments of the present vial seal 10.

In one alternate embodiment (not shown) the first surface 13 can include an additional cross-contamination protective means such as a projecting ring surrounding each insert 14 which fits around the neck 32 of each reagent containment vial 30 when the inserts 14 of cover 12 engage the vials 30. This additional protective ring serves as a shield to minimize cross-contamination.

While the invention has been described in connection with the presently preferred embodiments thereof, it will be apparent to those skilled in the art that various changes and modifications to the structure, arrangement, portions, elements, materials and components used in the practice of the invention are possible without departing from the scope and spirit of the invention. The foregoing description is therefore to be taken as illustrative rather than limiting and the scope of the invention is defined solely by the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A vial seal (10) comprising a plurality of vial closure means (14) for correspondingly sealing a plurality of vials (30), characterized in that said closure means (14) are attached to pliable cover means (12) and define together therewith a single unit, said closure means (14) being further connected to means (24) for attaching said cover means (12) to said plurality of vials (30).

2. A vial seal (10) according to claim 1, characterized in that said pliable cover means (12) includes a first portion (11) and a second portion (21), said first portion (11) including said vial closure means (14) along one surface (13) thereof, said first portion (11) having an inner end (17) and a free outer end (23) and being flanged outwardly from said inner end (17) toward said outer end (23).

3. A vial seal (10) according to claim 1 or 2, characterized in that said attaching means comprises a plurality of openings (24) formed in said pliable cover means (12) and adapted to fit over the upper ends or necks of a plurality of vials (30) to be sealed by said closure means (14) for attaching said cover means (12) thereto.

4. A vial seal (10) according to claim 1, 2 or 3, characterized in that it further comprises means (18, 19, 20) for securably positioning the closure means (14) proximate to the vials (30) when said closure means (14) are disengaged from said vials (33).

5. A vial seal (10) according to claim 1, 2 or 3 characterized in that said cover means (12) has first and second surfaces (13, 26) with said vial closure means (14) formed on a first portion (11) of said cover means (12) and said openings (24) positioned on a second portion (21) of said cover means (12).

6. A vial seal (10) according to claims 4 and 5, characterized in that said closure means (14) project away from said first surface (13) and in that said means (18, 19, 20) for securably positioning said closure means (14) include at least one aperture (20) positioned between said first (11) and second (21) portions of said cover means (12).

7. A vial seal (10) according to claims 5 and 6, characterized in that said aperture (20) is adapted to receive shaft means (18, 19) positioned along and extending outwardly from said second surface (26) of said second portion (21).

8. A vial seal (10) according to claim 1, 2, 3, 5 or 6, characterized in that said closure means (14) of said pliable cover (12) comprises at least three closure means (14), and in that said cover means (12) has at least three of said openings (24).

9. A vial seal (10) according to claim 1, 2, 3, 5, 6 or 8, characterized in that said pliable cover (12) contains rib means (33) formed therein between said closure means (14) for facilitating bending thereof.

**10.** A vial seal (10) according to one or more of the preceding claims, characterized in that the first surface (13) includes shielding means adjacent each of said vial closure means (14).

**11.** A vial seal (10) according to claim 1, 2, 3, 4, 5, 6, 8, 9 or 10, characterized in that the closure means (14) each have a circular base (15) attached to a cylindrical sidewall, said cylindrical sidewall preferably containing an outer rib (16) molded generally midway from said base (15) to the top of said cylindrical sidewall.

**12.** A vial seal (10) according to claim 1 and 2, 3, 4, 5, 6, 8, 9, 10 or 11, characterized in that the closure means (14) are linearly arranged and connected by said pliable cover means (12), said pliable cover means (12) generally conforming to a reagent pack (40) containing vial openings into which said closure means (14) are to be inserted for sealing.

**13.** A vial seal (10) according to one or more of the preceding claims characterized in that said pliable cover means (12) further comprises fastening means (18, 19, 20) positioned co-linearly with said closure means (14) for holding said closure means (14) in a position removed from vials (30).

**14.** A vial seal (10) according to claim 13, characterized in that said fastening means includes a shaft (18) culminating in a ball-shaped end (19) and a corresponding hole (20) formed in said pliable cover (12) for receiving and retaining said ball-shaped end (19) to retain said pliable cover (12) in a folded position with said closure means (12) removed from said vials (30).

**15.** A vial seal (10) according to claim 1, 2, 3, 5, 6, 8, 9, 12, 13 or 14, characterized in that the pliable cover means (12) contains a plurality of openings (24) formed therein corresponding in number to said closure means (14).

**16.** A vial seal (10) according to claim 3, 5, 8, 12 or 15, characterized in that said openings (24) are adapted to fit over and around the necks (32) of vials (30) in a reagent pack (40) to retain the vial seal (10) with the vials (30) whether or not sealed by said closure means (14).

**Revendications**

**1.** Fermeture de flacons (10) comprenant une pluralité de moyens obturateurs (14) de flacons destinés à fermer de façon correspondante une pluralité de flacons (30), caractérisée en ce que lesdits moyens obturateurs (14) sont fixés à un couvercle souple (12) et définissent avec ce couvercle une unité d'un seul tenant, lesdits moyens obturateurs (14) étant en outre reliés à des moyens (24) servant à attacher ledit couvercle (12) à ladite pluralité de flacons (30).

**2.** Fermeture de flacons (10) selon la revendication 1, caractérisée en ce que ledit couvercle souple (12) comprend une première portion (11) et une deuxième portion (21), ladite première portion (11) comprenant lesdits moyens obturateurs (14) de flacons le long d'une (13) de leurs surfaces, ladite portion (11) possédant une extrémité intérieure (17) et une extrémité extérieure libre (23) et étant redressée vers l'extérieur, de ladite extrémité intérieure (17) vers ladite extrémité extérieure (23).

**3.** Fermeture de flacons (10) selon la revendication 1 ou 2, caractérisée en ce que lesdits moyens d'attache comprennent une pluralité d'ouvertures (24) formées dans ledit couvercle souple (12) et adaptées pour s'emboîter sur les extrémités supérieures ou goulots d'une pluralité de flacons (30) qui doivent être fermés par lesdits moyens obturateurs (14), pour fixer ledit couvercle (12) à ces extrémités supérieures ou goulots.

**4.** Fermeture de flacons (10) selon la revendication 1, 2 ou 3, caractérisée en ce qu'elle comprend en outre des moyens (18, 19, 20) servant à positionner les moyens obturateurs (14) dans une position fixe à proximité des flacons (30) lorsque lesdits moyens obturateurs (14) sont dégagés desdits flacons (30).

**5.** Fermeture de flacons (10) selon la revendication 1, 2 ou 3, caractérisée en ce que ledit couvercle (12) possède des première et deuxième surfaces (12, 26), lesdits moyens obturateurs (14) de flacons étant formés sur une première portion (11) dudit couvercle (12) et lesdites ouvertures (24) étant situées dans une deuxième portion (21) dudit couvercle (12).

**6.** Fermeture de flacons (10) selon les revendications 4 et 5, caractérisée en ce que lesdits moyens obturateurs (14) font saillie sur ladite première surface (13) et lesdits moyens (18, 19, 20) servant à positionner lesdits moyens obturateurs (14) dans une position fixe comprennent au moins une ouverture (20) placée entre lesdites première (11) et deuxième (21) portions dudit couvercle (12).

7. Fermeture de flacons (10) selon les revendications 5 et 6, caractérisée en ce que ladite ouverture (20) est adaptée pour recevoir une tige (18, 19) située sur ladite deuxième surface (26) de ladite deuxième portion (21) et faisant saillie vers l'extérieur sur cette deuxième surface.

8. Fermeture (10) pour flacons selon la revendication 1, 2, 3, 5 ou 6, caractérisée en ce que lesdits moyens obturateurs (14) dudit couvercle souple (12) comprennent au moins trois moyens obturateurs (14) et en ce que ledit couvercle (12) présente au moins trois desdites ouvertures (24).

9. Fermeture (10) pour flacons selon une des revendications 1, 2, 3, 5, 6 ou 8, caractérisée en ce que ledit couvercle souole (12) contient des moyens (33) formant nervures, formés dans ce couvercle entre lesdits moyens obturateurs (14) pour faciliter le pliage du couvercle.

10. Fermeture (10) pour flacons selon une ou plusieurs des revendications précédentes, caractérisée en ce que la première surface (13) comprend des moyens séparateurs adjacents à chacun desdits moyens obturateurs (14) de flacons.

11. Fermeture (10) pour flacons selon une des revendications 1, 2, 3, 4, 5, 6, 8, 9 ou 10, caractérisée en ce que les moyens obturateurs (14) ont chacun une base circulaire (15) fixée à une paroi latérale cylindrique, ladite paroi latérale cylindrique présentant de préférence un bourrelet extérieur (16) moulé à peu près au milieu de la distance entre ladite base (15) et le haut de ladite paroi latérale cylindrique.

12. Fermeture (10) pour flacons selon la revendication 1 et l'une des revendications 2, 3, 4, 5, 6, 8, 9, 10, ou 11, caractérisée en ce que les moyens obturateurs (14) sont disposés en ligne et reliés entre eux par ledit couvercle souple (12), ledit couvercle souple (12) se conformant sensiblement à un ensemble de réactifs (40) qui présente des ouvertures de flacons dans lesquelles lesdits moyens obturateurs (14) sont destinés à s'insérer pour assurer la fermeture étanche.

13. Fermeture (10) pour flacons selon une ou plusieurs des revendications précédentes, caractérisée en ce que ledit couvercle souple (12) comprend en outre des moyens de fixation (18, 19, 20) disposés sur la même ligne que lesdits moyens obturateurs (14), et servant à maintenir lesdits moyens obturateurs (14) dans une position écartée des flacons (30).

14. Fermeture (10) pour flacons selon la revendication 13, caractérisée en ce que lesdits moyens de fixation comprennent une tige (18) qui se termine par une extrémité (19) en forme de boule, et un trou correspondant (20) formé dans ledit couvercle souple (12) pour recevoir et retenir ladite extrémité (19) en forme de boule afin de retenir ledit couvercle souple (12) dans une position pliée, dans laquelle lesdits moyens obturateurs (12) sont écartés desdits flacons (30).

15. Fermeture (10) pour flacons selon une des revendications 1, 2, 3, 5, 6, 8, 9, 12, 13 ou 14, caractérisée en ce que le couvercle souple (12) présente une pluralité d'ouvertures (24) qui y sont formées et qui correspondent en nombre auxdits moyens obturateurs (14).

16. Fermeture (10) pour flacons selon une des revendications 3, 5, 8, 12 eu 15, caractérisée en ce que lesdites ouvertures (24) sont adaptées pour s'emboîter sur les goulots (32) des flacons (30) d'un ensemble de réactifs (40) et autour de ces goulots, pour retenir la fermeture (10) de flacons et les flacons (30) ensemble aussi bien lorsque ces flacons sont fermés par lesdits moyens obturateurs (14) que s'ils ne le sont pas.

**Patentansprüche**

1. Glasfläschchenverschluß (10) mit einer Vielzahl von Glasfläschchen-Verschlußmitteln (14) zum entsprechenden Verschließen einer Vielzahl von Glasfläschchen (30), dadurch gekennzeichnet, daß die Verschlußmittel (14) an biegbaren Abdeckmitteln (12) befestigt sind und mit diesen eine Einheit bilden, wobei die Verschlußmittel (14) ferner mit Mitteln (24) zum Anbringen der Abdeckmittel (12) an der Vielzahl von Glasfläschchen (30) verbunden sind.

2. Glasfläschchenverschluß (10) nach Anspruch 1, dadurch gekennzeichnet, daß die biegbaren Abdeckmittel (12) einen ersten Teil (11) und einen zweiten Teil (21) aufweisen, wobei der erste Teil (11) die Glasfläschchen-Verschlußmittel (14) auf einer Oberfläche (13) desselben enthält, und wobei der erste Teil (11) ein inneres Ende (17) und ein freies äußeres Ende (23) hat und vom inneren Ende (17) gegen das äußere Ende (23) nach außen geflanscht ist.

3. Glasfläschchenverschluß (10) nach Anspruch 1 oder 2, dadurch gekennzeichnet, daß die Anbringmittel eine Vielzahl von Öffnungen (24) aufweisen, die in den biegbaren Abdeckmitteln (12) ausgebildet und befähigt sind, über die oberen Enden bzw. Hälse einer Vielzahl von durch die Verschlußmittel (14) zu verschließenden Glasfläschchen (30) zu passen, um die Abdeckmittel (12) an den Glasfläschchen anzubringen.

4. Glasfläschchenverschluß (10) nach Anspruch 1, 2 oder 3, dadurch gekennzeichnet, daß er ferner Mittel (18, 19, 20) zum sicheren Positionieren der Verschlußmittel (14) in der Nähe der Glasfläschchen (30) aufweist, wenn die Verschlußmittel (14) von den Glasfläschchen (30) gelöst werden.

5. Glasfläschchenverschluß (10) nach Anspruch 1, 2 oder 3, dadurch gekennzeichnet, daß die Abdeckmittel (12) erste und zweite Flächen (13, 26) haben, wobei die Glasfläschchen-Verschlußmittel (14) an einem ersten Teil (11) der Abdeckmittel (12) ausgeformt und die Öffnungen (24) an einem zweiten Teil (21) der Abdeckmittel (12) vorgesehen sind.

6. Glasfläschchenverschluß (10) nach den Ansprüchen 4 und 5, dadurch gekennzeichnet, daß die Verschlußmittel (14) sich von der ersten Fläche (13) wegerstrecken und daß die Mittel (18, 19, 20) zum sicheren Positionieren der Verschlußmittel (14) zumindest eine Öffnung (20) aufweisen, die zwischen dem ersten Teil (11) und dem zweiten Teil (21) der Abdeckmittel (12) angeordnet ist.

7. Glasfläschchenverschluß (10) nach den Ansprüchen 5 und 6, dadurch gekennzeichnet, daß die Öffnung (20) befähigt ist, Schaftmittel (18, 19) aufzunehmen, die entlang der zweiten Fläche (26) des zweiten Teiles (21) angeordnet sind und sich von dieser nach außen erstrecken.

8. Glasfläschchenverschluß (10) nach den Ansprüchen 1, 2, 3, 5 oder 6, dadurch gekennzeichnet, daß die Verschlußmittel (14) der biegbaren Abdeckung zumindest drei Verschlußmittel (14) und die Abdeckmittel (12) zumindest drei Öffnungen (24) aufweisen.

9. Glasfläschchenverschluß (10) nach einem der Ansprüche 1, 2, 3, 5, 6 oder 8, dadurch gekennzeichnet, daß die biegbare Abdeckung (12) Rippenmittel (33) aufweist, die in dieser zwischen den Verschlußmitteln (14) zum leichteren Biegen derselben ausgeformt sind.

10. Glasfläschchenverschluß (10) nach einem oder mehreren der vorhergehenden Ansprüche, dadurch gekennzeichnet, daß die erste Oberfläche (13) Abschirmmittel nahe jedem der Glasfläschchen-Verschlußmittel (14) aufweist.

11. Glasfläschchenverschluß (10) nach einem der Ansprüche 1, 2, 3, 4, 5, 6, 8, 9 oder 10, dadurch gekennzeichnet, daß die Verschlußmittel (14) je eine kreisförmige Basis (15) haben, die an einer zylindrischen Seitenwand vorgesehen ist, wobei die zylindrische Seitenwand vorzugsweise eine äußere Rippe (16) aufweist, die allgemein auf halbem Weg von der Basis (15) zur Oberseite der zylindrischen Seitenwand hin geformt ist.

12. Glasfläschchenverschluß (10) nach den Ansprüchen 1 und 2, 3, 4, 5, 6, 8, 9, 10 oder 11, dadurch gekennzeichnet, daß die Verschlußmittel (14) linear angeordnet und durch die biegbaren Abdeckmittel (12) verbunden sind, wobei die biegbaren Abdeckmittel (12) im allgemeinen einer Reagenspackung (40) angepaßt sind, welche Glasfläschchenöffnungen enthält, in welche die Verschlußmittel (14) zum Verschließen einzusetzen sind.

13. Glasfläschchenverschluß (10) nach einem oder mehreren der vorhergehenden Ansprüche, dadurch gekennzeichnet, daß die biegbaren Abdeckmittel (12) ferner Befestigungsmittel (18, 19, 20) aufweisen, die kollinear mit den Verschlußmitteln (14) angeordnet sind, um die Verschlußmittel (14) in einer von den Glasfläschchen (30) entfernten Position zu halten.

14. Glasfläschchenverschluß (10) nach Anspruch 13, dadurch gekennzeichnet, daß die Befestigungsmittel einen Schaft (18) umfassen, der in einem kugelförmigen Ende (19) ausläuft, und ein entsprechendes Loch (20), das in der biegbaren Abdeckung (12) ausgebildet ist, um das kugelförmige Ende (19) aufzunehmen und zu halten, um die biegbare Abdeckung (12) in einer gefalteten Position zu halten, in der die Verschlußmittel (12) von den Glasfläschchen (30) entfernt sind.

15. Glasfläschchenverschluß (10) nach den Ansprüchen 1, 2, 3, 5, 6, 8, 9, 12, 13 oder 14, dadurch gekennzeichnet, daß die biegbaren Abdeckmittel (12) eine Vielzahl von in diesen ausgebildeten Öffnungen (24) aufweisen, deren Anzahl der Anzahl der Verschlußmittel (14) entspricht.

16. Glasfläschchenverschluß (10) nach Anspruch 3, 5, 8, 12 oder 15, dadurch gekennzeichnet, daß die Öffnungen (24) so ausgebildet sind, daß sie über und um die Hälse (32) der Glasfläschchen (30) einer Reagenspackung (40) passen, um den Glasfläschchenverschluß (10) mit den Glasfläschchen (30) zu halten, gleichgültig ob diese von den Verschlußmitteln (14) verschlossen sind oder nicht.

FIG-1.

FIG-2.

FIG-3.